# EUROPEAN PATENT SPECIFICATION

(11) **EP 2 276 971 B1**
(45) Date of publication and mention of the grant of the patent: **11.01.2017**
(21) Application number: 09736039.0
(22) Date of filing: 06.04.2009
(51) Int. Cl.: F21V 7/22

(54) **PLATING REFLECTORS PROCESS FOR OUTDOOR AND INDOOR SPOTLIGHTS**
REFLEKTORPLATTIERUNGSVERFAHREN FÜR AUSSEN- UND INNENSCHEINWERFER
PROCEDE DE PLACAGE D'UN REFLECTEUR POUR DES PROJECTEURS D'ECLAIRAGE INTERIEUR ET EXTERIEUR

(30) Priority: 21.04.2008 IT MI20080722
(43) Date of publication of application: 26.01.2011
(73) Proprietor: FAEL S.p.A., 20864 Agrate Brianza (MB) (IT)
(72) Inventor: SANGIORGIO, Flavio Mauro, I-20046 Biassono (IT)
(74) Representative: Mittler, Enrico
(86) International application number: PCT/EP2009/054097
(87) International publication number: WO 2009/130123

(56) References cited:
- EP-A1- 1 720 046
- EP-A2- 1 900 504
- WO-A1-95/03510
- WO-A1-99/19529
- FR-A- 1 324 047
- US-A- 2 387 038

## Description

The present invention relates to a vacuum plating process for reflecting surfaces for outdoor and indoor spotlights.

Street spotlights, lights for architectural upgrading, light arrays for gymnasiums, football pitches and similar community structures are valid usage examples.

The critical components of the spotlights are a reflecting surface (hereinafter: reflector) having a shape and a surface finishing, and a lamp.

The spotlights have a specific photometric curve of the lamp-and-reflector type associated thereto, i.e. a Cartesian or polar diagram correlating the luminous intensity with the angle to the lamp normal.

Once the type of lamp to be used has been fixed, the photometric curve should be considered as influenced both by the shape parameters of the reflector and the type of surface finishing, as well as the type of lamp, of course.

The reflectors, specifically those for street light frameworks, have been hitherto made of aluminium that was drawn, cut off and then polished and anodised. As it will be seen hereinafter, this finishing is not acceptable in modern standards.

More recently, reflectors moulded in thermoplastic material or aluminium that was drawn and cut off, and then vacuum plated have been made. The plating has always been of the smooth type.

The technical problem that we aim at solving is to implement street reflectors with photometric curve features adapting to the required lighting situation, i.e. adapting to the lamp, without changing the physical shape of the reflector, which needs major adaptations under an economical point of view as the moulds need to be re-made. Therefore, there is nothing left but acting on the surface finishing of the reflector.

We also aim at keeping both acceptable efficiencies (e.g. more than or equal to 78%) and an acceptable repeatability, with variations in luminous intensity of the order of 10% and variations in efficiencies of the order of 5%.

Using the smooth plating should also be considered as almost compulsory, since the alternative would be anodising polishing, which has a major constraint. Indeed, it is true that upon varying the anodising thickness depending on the permanence time of the reflector in the anodising bath, a photometric curve variation is achieved, the physical shape of the reflector being unchanged, but the reflector efficiency unacceptably decreases (< 70%) as the anodising thickness increases, and this processing is neither recommendable nor acceptable in the view of energy saving.

On the other hand, plating allows an efficiency even higher than 80% but has two major constraints: first, a mirror finishing is provided and the consequent mirror reflection makes minor faults in positioning the lamp, the lamp-holder or the reflector on the supports generate a variation in the photometric curve, which will no longer correspond to that of the ideal alignment. Therefore, the repeatability of the result is not ensured.

The further constraint of smooth plating according to the prior art is that of being a treatment not allowing to be modulated so as to be able to vary the photometric curve. Therefore, it does not solve the above technical problem, i.e. being able of varying the photometric curve without changing the reflector shape under the afore-mentioned conditions.

EP-1720046-A1 and EP-1900504-A2 disclose plating reflectors processes for spotlights.

It is the object of the present invention to manufacture a reflector for outdoor and indoor spotlights with a surface finishing which may be modulated according to the technical light needs, and acceptable efficiencies and repeatability.

In accordance with the invention, such an object is attained by a plating reflectors process as disclosed in claim 1.

These and other features of the present invention will be more apparent from the following detailed description of a practical embodiment thereof, illustrated by way of non limiting example in the accompanying drawings, in which:
Figure 1 shows a perspective view of a spotlight according to the invention;
Figure 2 shows a photometric curve diagram of the spotlight according to the invention;
Figure 3 shows a scheme of a process for obtaining a spotlight according to the invention.

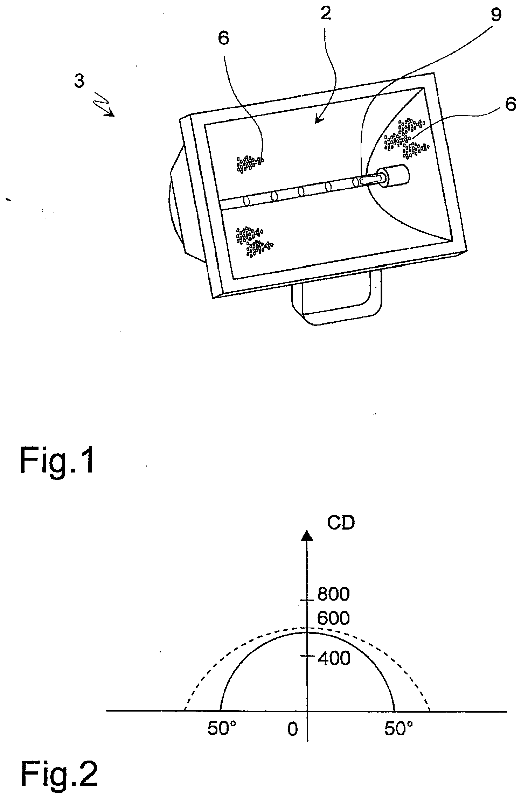

With reference to the enclosed Figures, and specifically to Figure 1, a spotlight 3 including a reflecting portion 2 placed about the back of a lamp 9 is shown. It should be noted that the surface is uniformly scattered with small bosses 6 which are incorporated into the reflecting surface and embossed thereto.

Figure 2 shows a photometric curve diagram having the angle values to the lamp normal, equal to zero, on the X axis and the light irradiation intensities in candelas on the Y axis.

As seen, the curve may be slightly modified for technical light needs and the result is visible in the broken-line curve.

This modification may be obtained by changing the size (usually from 1 to 3 mm) and the surface concentration (from 4 to 8 small bosses per square centimetre) of the small bosses 6 by means of the process described below.

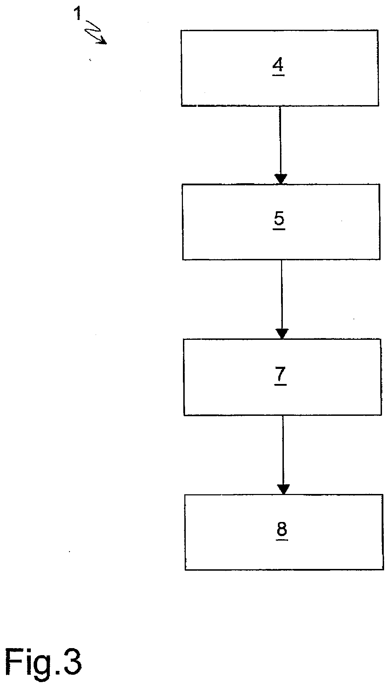

With reference to Figure 3, a block diagram of a process fro plating 1. the reflectors 2 for street spotlights 3 is depicted, comprising a step of pickling cleaning 4, a step of pre-painting 5 with a mixture made of a primer including small bosses 6 having a varying grain-size with a uniform statistical distribution of the small bosses on the reflector surface, and a solvent, a step of high vacuum plating 7 in which extra pure aluminium 99.9% is sublimed and then condensed on the surface to be plated, and the next-to-vacuum low pressure allows the metal molecules to reach the surface to be plated without the disturbances caused by air. Lastly, there follows a step of chemical water-repellent coating 8, specifically a siloxane coating, vacuum chemical post-evaporation, i.e. a coating by means of silicon oxide which gives durability and stability to the plating thus obtained: this is ensured by a micrometric glass state of Al2O3. More broadly speaking, the chemical coating may occur by means of a transparent oxide which is resistant to high temperatures (e.g. 250°C).

Specifically, small bosses 6 made of acrylic or thermo-setting material are mixed with a primer and a solvent, and said primer and solvent form a mixture having a varying percentage composition C by weight according to the following components and between the following thresholds:
- Xylene 20.00 < C < 30.00
- Isobutyl alcohol 5.00 < C < 10.00
- Maleic anhydride 0.7 < C < 0.08
- Stanol 10.00 < C < 20.00
- Butyl alcohol 5.00 < C < 10.00
- 1-Methoxy-2-propanol 1.00 < C < 4.00
- Formaldehyde 0.35 < C < 0.40

Varying the primer and solvent mixture composition varies the number of small bosses 6 per surface unity to be plated, so as to ensure that the chosen surface concentration of the small bosses in the subsequent steps is constant over the whole surface to be treated.

Corroborating the choice made, we point out the following experimental data table referring to two surface situations of reflector 2: the bright plating and the rustication for the same 250 Watts lamp and the identical reflector shape.

In this table, efficiency is in percentage, intensity is in candelas, psychological glare index Ti is in percentage, where 0% is no psychological glare, 100% is the maximum psychological glare; L is the average luminance in candelas per kilolumen; Uo is the total luminance uniformity; UL is the longitudinal luminance uniformity.

| | Efficiency % | Max. Intensity | Glare Ti % | L | Uo | UL |
|---|---|---|---|---|---|---|
| Bright plated (ITIN0100) | 81 | 500 | 13.4 | 2 | 0.52 | 0.65 |
| Rusticated (ITIN0101) | 82.7 | 440 | 8.31 | 2 | 0.54 | 0.67 |

The test conditions for the "bright plated" (FAEL reference file: ITIN0100) were as follows:
- Itinera apparatus, flat glass of focal position: FISSO-3-A
- laboratory lamp No. 19 PHILIPS SON-T 400W E40 Detected flux: 48323 Lumen
- "bright plated 400W" reflector
- supply voltage 230V
- room temperature 25°C

The test conditions for the "rusticated" (FAEL reference file: ITIN0101) were as follows:
- Itinera apparatus, flat glass of focal position: FISSO-3-A
- laboratory lamp No. 19 PHILIPS SON-T 400W E40 Detected flux: 48323 Lumen
- "rusticated 400W" reflector
- supply voltage 230V
- room temperature 25°C

It should be specifically noted that rustication produces a slightly higher efficiency, a slight drop in the maximum intensity, and a major drop in the psychological glare index, without any noticeable variation in the total or longitudinal brightness uniformity, specifically free from drops in Uo or UL, which would have increased glare index Ti.

In order to corroborate the choices made, we quote a table related to efficiency values in %, luminance L in candelas/m2, total luminance uniformity Uo and longitudinal luminance uniformity UL, relative to two spotlights with equal shape reflector and 250 Watts lamps, differing by type of surface treatment of the reflectors: the first having a rusticated finishing and the second an anodized finishing.

| | Efficiency % | L | Uo | UL |
|---|---|---|---|---|
| Rusticated (ITIN0255) | 76.5 | 2.2 | 0.65 | 0.64 |
| Anodized (ITIN0252) | 70 | 2.1 | 0.62 | 0.58 |

The test conditions for the "rusticated" (FAEL reference file: ITIN0255) were as follows:
- Itinera apparatus, flat glass of focal position: FISSO-3-A
- laboratory lamp No. 40 PHILIPS SON-T PIA PLUS 250W E40 Detected flux: 33220 Lumen
- "rusticated 400W" reflector
- supply voltage 230V
- room temperature 25°C

The test conditions for the "anodized" (FAEL reference file: ITIN0252) were as follows:
- Itinera apparatus, flat glass of focal position: FISSO-3-A
- laboratory lamp No. 40 PHILIPS SON-T PIA PLUS 250W E40 Detected flux: 33220 Lumen
- "anodized 400W" reflector
- supply voltage 230V
- room temperature 25°C

As pointed out by the data, there is an unacceptable drop in efficiency when luminance and total uniformity are substantially equal.

It is therefore apparent that the choices made are well-grounded and the technical problem of varying the photometric curve is therefore solved, without needing to change the shape of a spotlight reflector for indoor or outdoor lighting, the type of lamp remaining unchanged and appropriate values of efficiency and repeatability being kept.

Further corroborating the choices made, it should be considered that the plated surfaces have a photometric efficiency higher than 15-20% as compared to normal anodizations, and the decay in luminous flux after 10,000 hours is about 15-20%.

Anodization has an efficiency which is constantly lower than plating efficiency, and the luminous flux decay of the anodization is 20-25% after 10,000 hours.

The choice made regarding siloxane-coated plated surfaces yields an efficiency higher than 3-8% as compared to anodization, and the 5% decay at 10,000 hours is virtually negligible.

## Claims

1. A plating (1) reflectors (2) process for outdoor and indoor spotlights (3) comprising a step of pickling cleaning (4), a step of pre-painting (5) with a mixture made of a solvent and a primer including small bosses (6) having a varying grain-size, a step of high vacuum plating (7) with aluminium, and a step of chemical coating (8) including transparent oxides being resistant to high temperatures, **characterized in that** the dimensions of the small bosses (6) are in the range from 1 to 3 mm.

2. A process according to claim 1, **characterized in that** the number of small bosses (6) per square centimetre on the reflector surface is in the range from 4 to 8.

3. A process according to claim 1 or 2, **characterized in that** the chemical coating (8) includes silicon oxides.

4. A process (1) according to claim 1, 2 or 3, wherein the step of high vacuum plating (7) is produced with extra pure aluminium 99.95.

5. A process (1) according to any one of the claims from 1 to 4, wherein the step of chemical coating (8) consists of a siloxane coating, vacuum chemical post-evaporation.

6. A reflector (2) for outdoor and indoor spotlights (3) obtained by means of the process (1) according to one or more of the claims from 1 to 5.

## Patentansprüche

1. Plattierungsverfahren (1) für Reflektoren (2) für Außen- und Innenschein-werfer (3) mit dem Schritt Reinigen mit Beize (4), dem Schritt vorstreichen (5) mit einer Mischung aus einem Lösungsmittel und einer Grundierung einschließlich kleiner Buckel (6), die eine variierende Korngröße aufweisen, dem Schritt des Hochvakuumplattierens (7) mit Aluminium und dem Schritt des chemischen Beschichtens (8) einschließend transparente Oxide, die widerstandsfähig gegen hohe Temperaturen sind, **dadurch gekennzeichnet, dass** die Abmessungen der kleinen Buckel (6) im Bereich von 1 - 3 mm liegen.

2. Verfahren nach Anspruch 1, **dadurch gekennzeichnet, dass** die Anzahl der kleinen Buckel (6) pro cm² auf der Reflektoroberfläche im Bereich von 4 - 8 liegt.

3. Verfahren nach Anspruch 1 oder 2, **dadurch gekennzeichnet, dass** die chemische Beschichtung (8) Siliziumoxide umfasst.

4. Verfahren nach Anspruch 1, 2 oder 3, wobei der Schritt des Hochvakuumplatierens (7) mit extra reinem Aluminium 99,95 erzeugt wird.

5. Verfahren nach einem der Ansprüche 1 bis 4, wobei der Schritt des chemischen Beschichtens (8) aus einem Siloxan-Beschichten, vakuumchemische Nach-Verdampfung besteht.

6. Reflektor (2) für Außen- und Innenscheinwerfer (3) erhalten mittels des Verfahrens (1) nach einem oder mehreren der Ansprüche 1 bis 5.

## Revendications

1. Procédé de placage (1) de réflecteurs (2) pour des projecteurs (3) utilisables en intérieur et en extérieur comprenant une étape de nettoyage par décapage (4), une étape de peinture préalable (5) avec un mélange constitué d'un solvant et d'une couche primaire comportant de petits bossages (6) ayant une dimension de grain variable, une étape de placage sous vide poussé (7) avec de l'aluminium, et une étape de revêtement chimique (8) comportant des oxydes transparents qui sont résistants à des températures élevées, **caractérisé en ce que** les dimensions des petits bossages (6) se trouvent dans la plage allant de 1 à 3 mm.

2. Procédé selon la revendication 1, **caractérisé en ce que** le nombre de petits bossages (6) par centimètre carré sur la surface de réflecteur se trouve dans la plage allant de 4 à 8.

3. Procédé selon la revendication 1 ou 2, **caractérisé en ce que** le revêtement chimique (8) comporte des oxydes de silicium.

4. Procédé (1) selon la revendication 1, 2 ou 3, dans lequel l'étape de placage sous vide poussé (7) est réalisée avec de l'aluminium extra pur à 99,95%.

5. Procédé (1) selon l'une quelconque des revendications 1 à 4, dans lequel l'étape de revêtement chimique (8) consiste en une post-évaporation chimique sous vide pour revêtement au siloxane.

6. Réflecteur (2) pour des projecteurs (3) utilisables en intérieur et en extérieur obtenu au moyen du procédé (1) selon une ou plusieurs des revendications 1 à 5.
